# EUROPÄISCHE PATENTSCHRIFT

(11) **EP 1 976 697 B1**
(45) Veröffentlichungstag und Bekanntmachung des Hinweises auf die Patenterteilung: **29.06.2011**
(21) Anmeldenummer: 07702836.3
(22) Anmeldetag: 17.01.2007
(51) Int. Cl.: B32B 38/08, B44C 5/04

(54) **VERFAHREN ZUR HERSTELLUNG EINES VERKLEIDUNGSELEMENTS**
METHOD FOR PRODUCING A CLADDING ELEMENT
PROCÉDÉ DE PRODUCTION D'UN ÉLÉMENT DE REVÊTEMENT

(30) Priorität: 18.01.2006 DE 102006002417
(43) Veröffentlichungstag der Anmeldung: 08.10.2008
(73) Patentinhaber: Interglarion Limited, 2404 Engomi, Nikosia (CY)
(72) Erfinder: RUHDORFER, Herbert, A-5020 Salzburg (AT)
(74) Vertreter: Herzog, Markus
(86) Internationale Anmeldenummer: PCT/EP2007/000383
(87) Internationale Veröffentlichungsnummer: WO 2007/082732

(56) Entgegenhaltungen:
- EP-A- 0 745 478
- EP-A2- 0 103 344
- WO-A-97/17214
- US-A- 3 816 232

## Beschreibung

Die Erfindung betrifft ein Verfahren zur Herstellung eines Verkleidungselements, beispielsweise eines Fußbodenpaneels, eines Wandverkleidungselements, eines Möbelsichtfrontelements oder dergleichen, wobei das Verkleidungselement eine Grundplatte umfasst, welche an einer Oberfläche, nämlich ihrer Sichtfläche oder ihrer der Sichtfläche entgegengesetzten Anlagefläche, mit einer mit Harz getränkten Papierlage versehen ist.

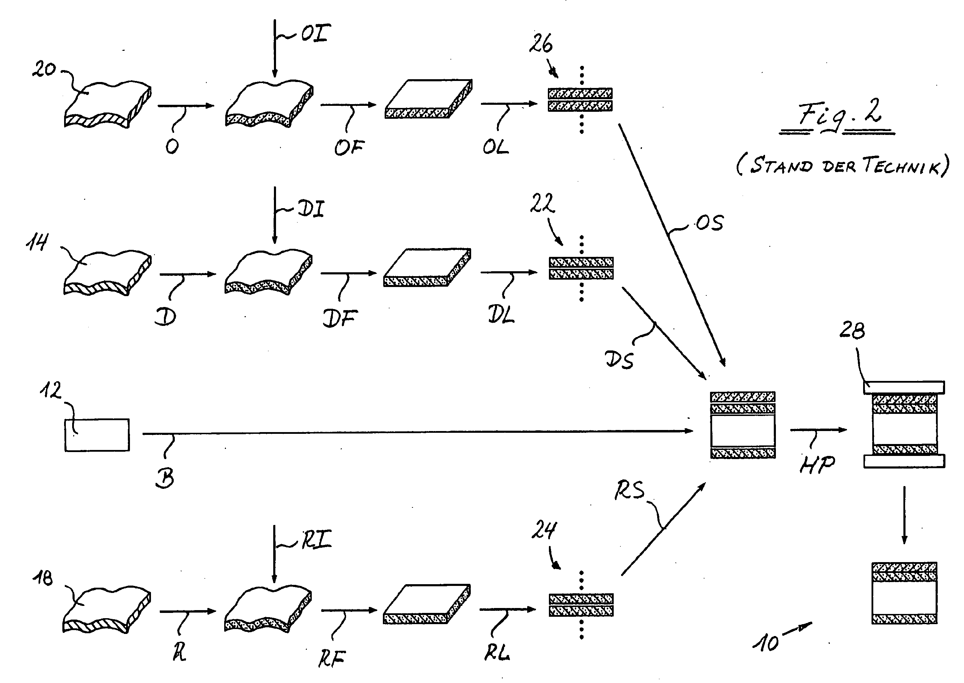

Derartige Verfahren sind im Stand der Technik allgemein bekannt. Ein solches Verfahren soll nachfolgend mit Bezug auf Fig. 2 näher erläutert werden. Bereits an dieser Stelle sei aber schon vorausgeschickt, dass sich das nachfolgend beschriebene Verfahren des Standes der Technik hinsichtlich der verwendeten Materialien nicht von dem erfindungsgemäßen Verfahren unterscheidet. Sämtliche mit Bezug auf das bekannte Verfahren gemachten Materialangaben sowie Angaben zu sonstigen Parametern wie Schichtdicken, Grammaturen und dergleichen gelten daher auch für das erfindungsgemäße Verfahren in gleicher Weise fort.

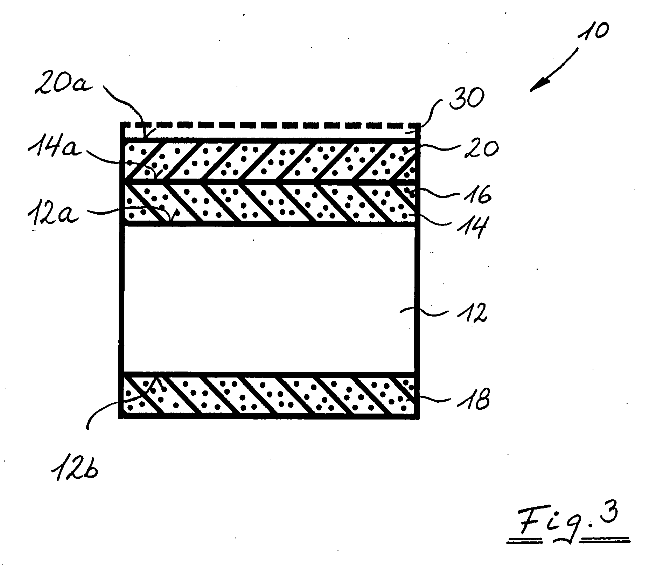

Sowohl das bekannte Verfahren, dessen Verfahrensschritte in Fig. 2 schematisch dargestellt sind, als auch das später zu diskutierende erfindungsgemäße Verfahren haben die Herstellung eines Verkleidungselements 10 zum Ziel, wie es in Fig. 3 dargestellt ist:

Das Verkleidungselement 10 umfasst eine Grundplatte 12, die vorzugsweise aus einem Holzwerkstoff gebildet ist, beispielsweise einer Spanplatte oder einer Faserplatte, etwa einer MDF-Platte (Medium Density Fiberboard) oder einer HDF-Platte (High Density Fiberboard). Falls das Verkleidungselement als Fußbodenpaneel eingesetzt wird, hat es vorzugsweise eine Dicke von etwa 5 mm bis etwa 15 mm.

An ihrer Sichtfläche 12a ist die Grundplatte 12 mit einer Dekorpapierlage 14 versehen, welche wenigstens eine Dekorpapierschicht 16 umfasst. An ihrer Sichtfläche 14a ist die Dekorpapierlage 14 bzw. deren oberste Dekorpapierschicht 16 mit einem gewünschten Dekor bedruckt, beispielsweise einem Holz, Stein, Fliesen oder dergleichen Materialien bzw. Produkte imitierenden Dekor. Das für die Dekorpapierlage 14 verwendete Papier weist üblicherweise eine Grammatur von insgesamt etwa 45 g/m² bis etwa 160 g/m² auf.

Solche Dekorpapiere werden an speziellen Imprägniermaschinen mit Imprägnierharz imprägniert bzw. durchtränkt, was in Fig. 3 gepunktet angedeutet ist. Die aufgebrachte Menge an Imprägnierharz beträgt bezogen auf das Rohpapiergewicht der Dekorpapierlage 14 etwa 100% bis etwa 140%.

Um verhindern zu können, dass es aufgrund der von der Dekorpapierlage 14 herrührenden Spannungen zu einer Verformung des Verkleidungselements 10 kommt, beispielsweise zu einer Aufwölbung, die dessen gewünschte vollkommen ebene und flächige Gestalt zerstört, kann optional auf der der Sichtfläche 12a der Grundplatte 12 entgegengesetzt angeordneten Rückfläche 12b der Grundplatte 12 eine Gegenzugpapierlage 18 angeordnet sein. Auch die Gegenzugpapierlage 18 ist mit Imprägnierharz getränkt, wie in Fig. 3 durch die Punktierung angedeutet ist. Hinsichtlich des Rohpapiergewichts, d.h. der Grammatur des verwendeten Papiers und der Menge aufgebrachten Imprägnierharzes entspricht die Gegenzugpapierlage 18 im Wesentlichen der Dekorpapierlage 14, um sicherzustellen, dass beide Papierlagen 14 und 18 einander im Wesentlichen aufhebende Spannungseinflüsse auf die Grundplatte 12 ausüben.

Um die Dekorpapierlage 14 gegenüber Abrieb zu schützen, was nicht nur bei Einsatz des Verkleidungselements 10 als Fußbodenpaneel, sondern auch bei dessen Einsatz als Wandverkleidungselement oder Möbelsichtfrontelement wichtig ist, kann ferner optional auf die Sichtfläche 14a der Dekorpapierlage 14 noch eine Deckpapierlage 20 (in der Fachsprache auch Overlay-Papierlage genannt) aufgebracht sein. Übliche Deckpapiere bzw. Overlay-Papiere haben vorzugsweise ein Rohpapiergewicht von etwa 10 g/m² bis etwa 80 g/m² und sind damit insbesondere dann, wenn sie mit lmprägnierharz getränkt sind, transparent, um den Blick auf das Dekor der Dekorpapierlage 14 nicht zu behindern. Bezogen auf das Rohpapiergewicht beträgt die Menge an Imprägnierharz zwischen etwa 100% und etwa 300%. Zur Erhöhung der Abriebbeständigkeit kann dem Imprägnierharz für die Deckpapierlage 20 ferner ein geeigneter Zuschlagsstoff, beispielsweise Korund, beigemengt sein, vorzugsweise in einer Menge von etwa 5 g/m² bis etwa 50 g/m².

Als Imprägnierharze kommen bevorzugt Aminoplastharze zum Einsatz, beispielsweise Harnstoffharze oder Melaminharze oder Gemische von Harnstoff- und Melaminharzen, wobei zum Imprägnieren der Deckpapierlage 20 bevorzugt Melaminharz verwendet wird.

Das bekannte Verfahren zur Herstellung eines derartigen Verkleidungselements 10, dessen einzelne Verfahrensschritte schematisch in Fig. 2 dargestellt sind, ist auf den Takt der Herstellung der Grundplatte 12 ausgerichtet. Daher müssen sämtliche im Schichtaufbau des Verkleidungselements 10 verwendeten Papiere in Zwischenspeichern auf Vorrat gehalten werden, damit es bei der Produktion nicht zu Verzögerungen im Vorschub der Grundplatten 12 kommt.

In einem Schritt D wird beispielsweise ein mit einem gewünschten Dekor bedrucktes Dekorpapier 14 bereitgestellt. Dieses wird in einem Schritt DI in einer speziellen Imprägniermaschine mit Imprägnierharz imprägniert. Dabei kann das Imprägnierharz in einer oder mehreren Stufen auf das Dekorpapier 14 aufgebracht werden, in dieses eindringen und anschließend angetrocknet werden. Das so imprägnierte Dekorpapier 14 wird dann in einem weiteren Schritt DF formatiert, d.h. auf eine auf die Größe der zugeführten Grundplatten 12 abgestimmte Größe zurechtgeschnitten. Das Dekorpapier 14 ist nun für die weitere Verarbeitung, insbesondere die Heißverpressung mit der Grundplatte 12, fertig und wird in einem Schritt DL einem Zwischenlager 22 zugeführt, wo es bis zur Weiterverarbeitung verbleibt.

In analoger Weise werden auch das Gegenzugpapier 18 und das Deckpapier 20 in dem Schritt D entsprechenden Schritten R und O als Rohpapier zugeführt, in dem Schritt DI entsprechenden Schritten RI und OI mit Imprägnierharz imprägniert, in dem Schritt DF entsprechenden Schritten RF und OF formatiert und in dem Schritt DL entsprechenden Schritten RL und OL dem Zwischenlager 22 entsprechenden Zwischenlagern 24 und 26 zugeführt.

Wird nun in einem Schritt B eine Grundplatte 12 angefördert, so werden in Schritten DS, RS und OS jeweils ein imprägniertes und formatiertes Dekorpapier 14, Gegenzugpapier 18 und Deckpapier 20 aus den zugehörigen Zwischenlagern 22, 24 und 26 entnommen und in der vorstehend mit Bezug auf Fig. 3 beschriebenen Reihenfolge aufeinander gestapelt. Anschließend wird dieser Stapel in einem Schritt HP einer Heißpresse 28 zugeführt, in der die Papierlagen 14, 18 und 20 zur Bildung des gewünschten Endprodukts, nämlich des Verkleidungselements 10, unter Anwendung eines erhöhten Drucks und einer erhöhten Temperatur mit der Grundplatte 12 verpresst werden.

Obgleich die Heißpresse 28 in Fig. 2 grob schematisch in Form zweier Pressplatten, d.h. in Form einer stationär arbeitenden Presse, angedeutet ist, versteht es sich, dass ebenso gut auch kontinuierlich oder quasikontinuierlich arbeitende Pressen, beispielsweise Durchlaufpressen, eingesetzt werden können.

Das bekannte Verfahren hat den Nachteil, dass die mit Imprägnierharz imprägnierten Papiere nur eine zeitlich begrenzte Lagerstabilität aufweisen. Das Imprägnierharz darf nämlich vor dem Heißpressen nicht schon vollständig durchgetrocknet sein, sondern darf lediglich so kontakttrocken sein, dass die einzelnen Papierlagen in den Zwischenlagern, beispielsweise dem Zwischenlager 22 für Dekorpapier 14, nicht aneinander anhaften. Im Zwischenlager trocknen die Papiere, insbesondere das Imprägnierharz, mit dem sie getränkt sind, jedoch weiter, so dass sie bei einer zu hohen Lagerdauer einen Trockungsgrad erreichen, der ein ordnungsgemäßes Heißverpressen nicht mehr zulässt. Zu lange gelagerte imprägnierte Papiere müssen daher ausgesondert und entsorgt werden, was nicht zuletzt aufgrund der hohen Materialkosten für die zum Imprägnieren üblicherweise verwendeten Aminoplastharze von Nachteil ist.

WO 97/17214 A offenbart ein Verfahren zur Herstellung eines Verkleidungselements mit einer Grundplatte, auf deren Sichtfläche eine Dekorlage angeordnet ist, und deren Rückseite eine Gegenzuglage trägt. In einer Gussform wird ein Harzgusskörper, welcher durch eine Spanplatte verstärkt ist, zusammen mit Dekorlagen hergestellt. Die Dekorlagen werden in die Gussform eingelegt, woraufhin die Gussform mit flüssigem Harz gefüllt und das Verkleidungselement schließlich als Harzformkörper in der Gussform hergestellt wird.

Zur Illustration des technischen Hintergrunds kann ferner auch auf die EP 0 745 478 A2 verwiesen werden, welche die Beschichtung eines endlosen Bahnmaterials, nämlich einer Linoleumbahn, beschreibt, wobei auf eine mit flüssigem Lack beschichtete Linoleumbahn eine Papierlage aufgewalzt wird.

Es ist Aufgabe der vorliegenden Erfindung, ein Verfahren der eingangs genannten Art anzugeben, mit welchem die Ausschussmengen reduziert, wenn nicht gar vollständig vermieden werden können.

Diese Aufgabe wird erfindungsgemäß durch ein Verfahren gemäß Anspruch 1 gelöst.

Erfindungsgemäß wird die Papierlage also nicht schon vor der Zwischenlagerung mit Harz imprägniert, sondern sie wird mit dem auf die Grundplatte aufgebrachten Harz erst beim Verpressen von Papierlage und Grundplatte in Kontakt gebracht und dabei von dem Harz durchtränkt. Das eigentliche Imprägnieren der Papierlage erfolgt also erst beim Verpressen. Das Papier kann daher als Rohpapier zwischengelagert werden, sodass es keinerlei zeitlichen Beschränkungen mehr hinsichtlich der Zwischenlagerzeit unterworfen ist. Dabei wird unter Rohpapier im Falle der Dekorpapierlage auch bereits mit einem Dekor bedrucktes Papier verstanden. Da das Harz erfindungsgemäß auf die Grundplatte aufgetragen wird, ist zudem sichergestellt, dass Harz immer nur dann verbraucht wird, wenn auch tatsächlich eine Grundplatte zur weiteren Verarbeitung zur Verfügung steht. Das Harz kann auf die Sichtfläche oder/und die Anlagefläche beispielsweise mit einem Flächengewicht von zwischen etwa 50 g/m² und etwa 200 g/m² aufgetragen werden. Der Auftrag kann beispielsweise mittels eines an sich bekannten Walzenauftragswerks erfolgen.

Ein zum Aushärten des Harzes erforderlicher Härter kann in Weiterbildung der Erfindung in dem ersten Schritt gemeinsam mit dem Harz auf die Oberfläche der Grundplatte aufgebracht werden, vorzugsweise als Harz-Härter-Gemisch. Alternativ ist es aber auch möglich und sogar vorteilhaft, wenn der Härter und das Harz in zwei voneinander getrennten Schritten auf die Oberfläche der Grundplatte aufgebracht werden. Und zwar wird der Härter vorzugsweise in einem dem ersten Schritt zeitlich vorangehenden vierten Schritt von dem Harz getrennt auf die Oberfläche der Grundplatte aufgebracht. Durch die letztgenannte Verfahrensvariante kann auch noch das Problem umgangen werden, dass ein einmal mit dem Härter vermischtes Harz innerhalb einer vorbestimmten Verarbeitungszeit, auch Topfzeit genannt, verarbeitet werden muss. Dies führt zu einer weiteren Reduzierung der Gefahr von Materialausschuss und trägt somit zu einer Senkung der Herstellungskosten der Verkleidungselemente bei.

Als Härter kann beispielsweise eine Ammoniumchlorid-Lösung oder eine Ammoniumsulfat-Lösung oder eine Maleinsäureanhydrid-Lösung verwendet werden.

Wie dies aus dem Stand der Technik an sich bekannt ist, kann auch bei dem erfindungsgemäßen Verfahren die Papierlage in einem dem zweiten Schritt zeitlich vorangehenden fünften Schritt formatiert werden, wobei der Unterschied zum Verfahren des Standes der Technik lediglich darin besteht, dass die Papierlage als Rohpapierlage formatiert wird.

In Abhängigkeit des gewünschten Aufbaus des herzustellenden Verkleidungselements kann nach dem erfindungsgemäßen Verfahren lediglich eine Dekorpapierlage auf die Sichtfläche der Grundplatte aufgebracht werden. Im Hinblick auf die eingangs erläuterte Verformungsproblematik kann optional ferner auf der Anlagefläche der Grundplatte eine Gegenzugpapierlage vorgesehen werden.

Die Grundplatte ist sowohl an ihrer Sichtfläche als auch an ihrer Anlagefläche jeweils mit einer Papierlage versehen, nämlich einer Dekorpapierlage an der Sichtfläche und einer Gegenzugpapierlage an der Anlagefläche. In Weiterbildung der Erfindung ist es vorteilhaft, da zeitsparend, wenn die ersten Schritte des Aufbringens des jeweiligen Harzes auf die jeweilige Oberfläche oder/und die zweiten Schritte des Aufbringens der jeweiligen Papierlage auf die jeweilige mit Harz versehene Oberfläche im Wesentlichen gleichzeitig vorgenommen werden.

Außerdem ist es im Hinblick auf die eingangs erläuterte Abnutzungs- bzw. Abriebproblematik optional ferner möglich, auf der Sichtseite der Grundplatte über der Dekorpapierlage noch eine Deckpapierlage vorzusehen. In diesem Fall kann die in dem ersten Schritt auf die Sichtfläche der Grundplatte aufgebrachte Harzmenge vorzugsweise derart bemessen sein, dass sie beim Verpressen der Papierlagen mit der Grundplatte im dritten Verfahrensschritt zum Durchtränken bzw. Imprägnieren sowohl der Dekorpapierlage als auch der Deckpapierlage ausreicht.

Darüber hinaus kann man dann, wenn die Grundplatte an ihrer Sichtfläche sowohl mit einer Dekorpapierlage als auch mit einer Deckpapierlage versehen ist, die zweiten Schritte des Aufbringens der beiden Papierlagen auf die mit Harz versehene Sichtfläche der Grundplatte oder/und die dritten Schritte des Verpressens der beiden Papierlagen mit der Grundplatte im Wesentlichen gleichzeitig vornehmen.

Wie eingangs bereits erwähnt, kann das Harz ein Aminoplastharz sein, vorzugsweise ein Harnstoffharz oder ein Melaminharz oder ein Harnstoffharz-Melaminharz-Gemisch. Ferner kann das Harz, insbesondere das zum Imprägnieren der sichtflächenseitig vorgesehenen Papierlagen verwendete Harz, wenigstens einen die Abriebfestigkeit erhöhenden Stoff, beispielsweise Korund, enthalten.

Nachzutragen ist noch, dass jede der Papierlagen, d.h. die Dekorpapierlage oder/und die Gegenzugpapierlage oder/und die Deckpapierlage, von einer Mehrzahl von Papierschichten gebildet sein kann.

Gewünschtenfalls kann das so hergestellte Verkleidungselement einer Oberflächenveredelung zugeführt werden. Hierzu wird die Oberfläche der Dekorpapierlage bzw. gegebenenfalls die Oberfläche der Deckpapierlage zunächst einer Oberflächenbehandlung unterzogen. Diese Oberflächenbehandlung kann eine chemische Behandlung, beispielsweise das Auftragen eines Haftvermittlers oder/und eine Fluorierung, oder/und eine mechanische Behandlung, beispielsweise das Anschleifen der Oberfläche, oder/und eine elektrische Behandlung, beispielsweise eine Coronabehandlung oder/und eine Plasmabehandlung, umfassen. Auf die so vorbereitete Oberfläche kann anschließend eine Lackschicht aufgebracht und getrocknet werden. Gewünschtenfalls kann dieser Lackauftrag auch mehrmals wiederholt werden, erforderlichenfalls unter erneuter vorheriger Oberflächenbehandlung der zuletzt aufgetragenen Lackschicht.

Als Haftvermittler kommt beispielsweise das von Fa. Henelit, Villach, Österreich vertriebene Produkt "Hydrohaftgrund E643" oder organofunktionelles Silan in Frage. Organofunktionelle Silane sind hybride Verbindungen mit einer reaktiven organischen Gruppe und einem anorganischen Alkylsilikat, bei denen sowohl die organische funktionelle Gruppe als auch die anorganische hydrolisierbare Alkoxygruppe jeweils auf das verwendete Tränkharz bzw. Aminoplastharz und den verwendeten Lack abgestimmt werden können, um gute Haftvermittlungseigenschaften zu erreichen.

Bei der Fluorierung kann die mit der Grundplatte verpresste, harzgetränkte Dekorpapierlage in einem Vakuumreaktor behandelt werden. Nach dem Evakuieren und Inertisieren des Reaktors, d.h. dem Entfernen von etwaig noch an Reaktoroberflächen anhaftenden oder gebundenen Verunreinigungen, beispielsweise durch Spülen mit Inertgas, Erhitzen des Reaktors oder dergleichen, wird gezielt Fluor und Inertgas zugegeben, wobei ein variables Konzentrationsprofil des Fluorgemisches bei Umgebungstemperatur während der Behandlungszeit verwendet werden kann, um optimale Ergebnisse zu erzielen. Danach wird der Reaktor evakuiert, gespült und die Dekorpapierlage kann entnommen werden. Diese sogenannte Offline-Fluorierung kann als Nachbehandlungsmethode in jedes Produktionsverfahren integriert werden. Durch die Fluorierung wird die Oberflächenspannung und damit die Benetzung der Oberfläche durch einen Lack verbessert. Außerdem wird eine polare Oberfläche erreicht, was zu einer besseren Haftung einer Lackschicht führt.

Bei einer Coronabehandlung wird Luft, die sich im Zwischenraum zwischen zwei Elektroden befindet, ionisiert. Diese Ionen dringen dann in Abhängigkeit ihrer kinetischen Energie in die Oberfläche der zwischen den Elektroden angeordneten zu behandelnden Dekorpapierlage ein, und zwar beispielsweise bis zu 10 µm tief. Die dadurch bewirkten physikalischen und chemischen Veränderungen an der Oberfläche der behandelten Dekorpapierlage können noch nicht eindeutig erklärt werden. Es wird allerdings davon ausgegangen, dass sowohl Oxidationsvorgänge an der Oberfläche eine Rolle spielen als auch durch den Beschuss mit beschleunigten Ionen und Elektronen verursachte physikalische und chemische Veränderungen der Oberfläche stattfinden. Es ist jedoch eine wissenschaftlich gesicherte Tatsache, dass eine Coronabehandlung eine verbesserte Adhäsion der Oberfläche bewirkt, so dass, wie gewünscht, eine aufgetragene Lackschicht an einer derart behandelten Dekorpapierlage besser haftet.

Ähnliche Effekte werden auch mit der Plasmabehandlung erzielt, wobei hier nicht der direkte elektrische Lichtbogen, der an den mit Hochspannung beaufschlagten Elektroden entsteht, zur Behandlung der Oberfläche genutzt wird, sondern mittels Ladungstrennung ein reaktiver, potentialfreier Partikelstrahl ionisierter Luft erzeugt und auf die Oberfläche der zu behandelnden Dekorpapierlage gerichtet wird.

Durch entsprechendes Polieren der so nachbehandelten, insbesondere lackierten Oberfläche kann in einfacher Weise jede gewünschte Oberflächen-Reflektionseigenschaft von mattglänzend bis hin zu hochglänzend erzielt werden. Insbesondere bei hochglänzend polierter Oberfläche ist ein Verkleidungselement, dessen Dekorpapierlage mit einem Holzdekor bedruckt ist, von Echtholz praktisch nicht zu unterscheiden.

Die Erfindung wird im Folgenden mit Bezug auf die beigefügte Zeichnung an einem Ausführungsbeispiel näher erläutert werden. Es stellt dar:
- Fig. 1: ein schematisches Ablaufdiagramm einer Ausführungsvariante des erfindungsgemäßen Verfahrens;
- Fig. 2: eine Ansicht ähnlich Fig. 1 eines Herstellungsverfahrens nach dem Stand der Technik; und
- Fig. 3: eine schematische Darstellung zur Erläuterung des Schichtaufbaus eines nach dem erfindungsgemäßen Verfahren herzustellenden Verkleidungselements.

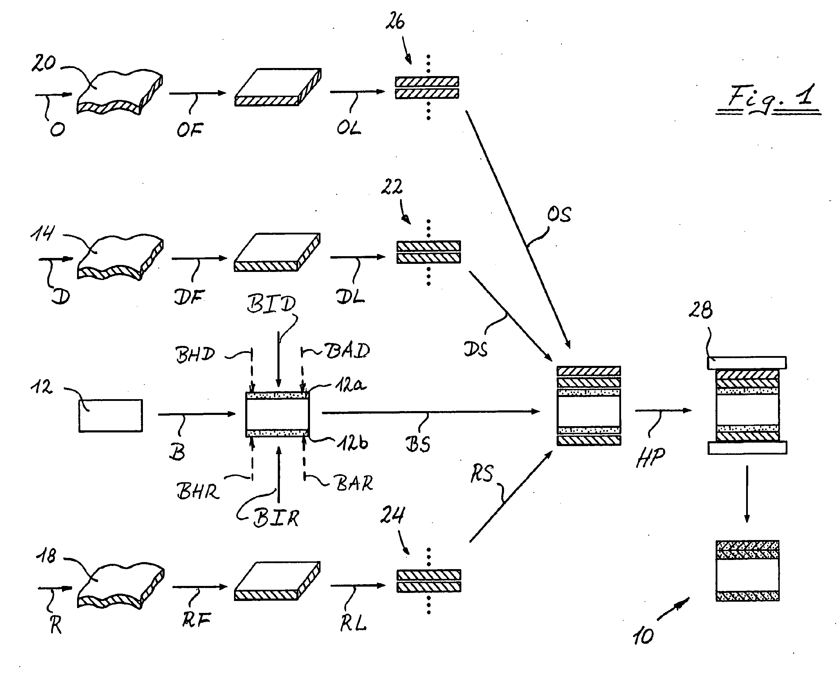

Mit Bezug auf Fig. 1 wird im Folgenden ein erfindungsgemäßes Verfahren zur Herstellung eines Verkleidungselements 10 näher erläutert werden, das den eingangs bereits mit Bezug auf Fig. 3 erläuterten Aufbau aufweist, d.h. insbesondere an seiner Sichtfläche 12a sowohl mit einer Dekorpapierlage 14 als auch mit einer Deckpapierlage 20, und an seiner Anlagefläche 12b mit einer Gegenzugpapierlage 18 versehen ist.

Wie in Fig. 1 dargestellt, wird die Dekorpapierlage 14 in einem Schritt D als Rohpapier bereitgestellt und in einem Schritt DF in einer zu den Abmessungen der Grundplatte 12 passenden Größe formatiert. In einem Schritt DL wird die formatierte Dekorpapierlage 14 dann einem Zwischenspeicher 22 zugeführt, in welchem sie bis zur weiteren Verarbeitung zwischengelagert wird.

In analoger Weise werden in dem Schritt D entsprechenden Schritten R bzw. O als Rohpapier bereitgestellte Gegenzugpapierlagen 18 bzw. Deckpapierlagen 20 in dem Schritt DF entsprechenden Schritten RF bzw. OF formatiert und in dem Schritt DL entsprechenden Schritten RL bzw. OL einem Zwischenspeicher 24 bzw. 26 zugeführt. Im Unterschied zu dem eingangs erläuterten Verfahren des Standes der Technik sind die in den Zwischenspeichern 22, 24 und 26 zwischengelagerten Papiere also nicht mit Harz imprägniert. Hierdurch entfällt das bei dem bekannten Verfahren auftretende Problem, dass von der Trocknungszeit des Harzes herrührende, maximale Zwischenlagerzeiten beachtet werden müssen, vollständig.

Bei dem erfindungsgemäßen Verfahren wird eine in einem Schritt B bereitgestellte Grundplatte 12 in einem Schritt BID auf ihrer Sichtfläche 12a mit einer Schicht aus Imprägnierharz, genauer gesagt mit einer Schicht aus einem Imprägnierharz-Härter-Gemisch, versehen. Erforderlichenfalls kann die Grundplatte 12 auch rückseitig, d.h. auf ihrer Anlagefläche 12b, in einem Schritt BIR mit einer entsprechenden Schicht versehen werden.

Alternativ können die Schritte BID und BIR jeweils auch in zwei im zeitlichen Abstand erfolgende Schritte BHD und BAD bzw. BHR und BAR aufgeteilt werden, was in Fig. 1 durch gestrichelte Pfeile angedeutet ist. In den Schritten BHD und BHR wird dabei zunächst ein zum Aushärten des Imprägnierharzes erforderlicher Härter auf die Sichtfläche 12a bzw. die Rückfläche 12b der Grundplatte 12 aufgebracht, und erfolgt anschließend in den Schritten BAD und BAR der eigentliche Auftrag des Imprägnierharzes. Die letztgenannte Verfahrensvariante ist im Hinblick auf das Problem der Topfzeit eines Imprägnierharz-Härter-Gemisches von Vorteil.

Die Schritte BID und BIR bzw. die Schritte BHD und BHR und die Schritte BAD und BAR können vorzugsweise im Wesentlichen zeitgleich vorgenommen werden.

Die so auf ihren beiden Oberflächen 12a, 12b mit Harz beschichtete Grundplatte 12 wird in einem Schritt BS einem Stapelungsvorgang zugeführt, in welchem auf die Sichtfläche 12a der Grundplatte 12 eine in einem Schritt DS zugeführte Dekorpapierlage 14 und optional eine in einem Schritt OS zugeführte Deckpapierlage 20 aufgelegt wird, sowie ferner optional auf die Anlagefläche 12b der Grundplatte 12 eine in einem Zuführschritt RS zugeführte Gegenzugpapierlage 18 aufgelegt wird. Der so gebildete Stapel wird in einem Schritt HP einer Heißpresse 28 zugeführt, in welcher die verschiedenen Papierlagen unter erhöhtem Druck und erhöhter Temperatur mit der Grundplatte 12 verpresst werden. Insbesondere dringt während dieses Pressvorgangs das auf die Grundplatte 12 aufgebrachte Harz in die verschiedenen Papierlagen ein und durchtränkt bzw. imprägniert diese. Man erhält so ein Verkleidungselement 10 mit dem in Fig. 3 dargestellten Schichtaufbau.

Anschließend kann das so hergestellte Verkleidungselement 10 gewünschtenfalls noch einer Oberflächenveredelung unterzogen werden. Hierzu wird die Oberfläche 14a der Dekorpapierlage bzw. gegebenenfalls die Oberfläche 20a der Deckpapierlage 20 zunächst einer Oberflächenbehandlung unterzogen. Diese Oberflächenbehandlung kann eine chemische Behandlung, beispielsweise das Auftragen eines Haftvermittlers oder/und eine Fluorierung, oder/und eine mechanische Behandlung, beispielsweise das Anschleifen der Oberfläche, oder/und eine elektrische Behandlung, beispielsweise eine Coronabehandlung oder/und eine Plasmabehandlung, umfassen. Auf die so vorbereitete Oberfläche kann anschließend eine Lackschicht 30 aufgebracht und getrocknet werden, die in Fig. 3 lediglich gestrichelt angedeutet ist. Gewünschtenfalls kann dieser Lackauftrag auch mehrmals wiederholt werden, erforderlichenfalls unter vorheriger Oberflächenbehandlung der zuletzt aufgetragenen Lackschicht.

Gemäß eines Ausführungsbeispiels umfasst die Oberflächenbehandlung zunächst das Aufbringen eines Haftvermittlers, beispielsweise des von Fa. Henelit, Villach, Österreich vertriebenen Produkts "Hydrohaftgrund E643", und zwar in einer Menge von zwischen etwa 5 g/m² und etwa 30 g/m². Dieser Haftvermittler wird anschließend mittels UV-Strahlung ausgehärtet. Zur weiteren Verbesserung der Haftfestigkeit des folgenden Lackauftrags kann die Oberfläche dann gewünschtenfalls auch noch angeschliffen werden. Der Lack kann als Walzlack oder Sprühlack aufgetragen werden. Als Lack kann beispielsweise ein Polyurethanlack oder ein UV-Lack verwendet werden, etwa der von Fa. Henelit, Villach, Österreich vertriebene "UV Hydro brillant"-Lack. Der Lackauftrag kann in einer Menge von zwischen etwa 15 g/m² und etwa 30 g/m² für die Lackgrundschicht und zwischen etwa 5 g/m² und etwa 10 g/m² für weitere Lackschichten erfolgen.

Zur Erhöhung der Abriebbeständigkeit der Lackschicht kann dem Lack ein geeigneter Zuschlagsstoff beigemengt werden, beispielsweise Korund, vorzugsweise in einer Menge von etwa 5 g/m² bis etwa 50 g/m². Sofern die Abriebbeständigkeit der so aufgebrachten Lackschicht ausreicht, kann auf den Einsatz eines Deckpapiers verzichtet werden. Da die Lackschicht zu keiner zusätzlichen Spannung in dem auf die Sichtfläche 12a der Grundplatte 12 aufgebrachten Schichtaufbau führt, brauchen auf der Rückfläche 12b der Grundplatte 12 in der Gegenzugpapierlage 18 keine besonderen Vorkehrungen getroffen zu werden.

## Patentansprüche

1. Verfahren zur Herstellung eines Verkleidungselements (10), beispielsweise eines Fußbodenpaneels, eines Wandverkleidungselements, eines Möbelsichtfrontelements oder dergleichen, wobei das Verkleidungselement (10) eine Grundplatte (12) umfasst, welche an zwei Oberflächen, nämlich ihrer Sichtfläche (12a) und ihrer der Sichtfläche entgegengesetzten Anlagefläche (12b), jeweils mit einer mit Harz getränkten Papierlage (14, 18) versehen ist,
wobei man in einem ersten Schritt (BID, BIR) das Harz auf die Oberflächen (12a, 12b) der Grundplatte (12) aufbringt, man in einem auf den ersten Schritt (BID, BIR) zeitlich folgenden zweiten Schritt (DS, RS) die Papierlagen (14, 18) auf die Oberflächen (12a, 12b) der Grundplatte (12) aufbringt, und man in einem auf den zweiten Schritt (DS, RS) zeitlich folgenden dritten Schritt (HP) die auf den Oberflächen (12a, 12b) mit Harz versehene Grundplatte (12) und die beiden Papierlagen (14, 18) im Wesentlichen gleichzeitig miteinander verpresst,
wobei beide Papierlagen (14, 18) erst in dem dritten Schritt (HP) mit dem Harz getränkt werden.

2. Verfahren nach Anspruch 1,
**dadurch gekennzeichnet, dass** man einen zum Aushärten des Harzes erforderlichen Härter in dem ersten Schritt (BID, BIR) gemeinsam mit dem Harz auf die Oberfläche (12a, 12b) der Grundplatte (12) aufbringt, vorzugsweise als Harz-Härter-Gemisch.

3. Verfahren nach Anspruch 1,
**dadurch gekennzeichnet, dass** man einen zum Aushärten des Harzes erforderlichen Härter von dem Harz getrennt, vorzugsweise in einem dem ersten Schritt (BID, BIR) zeitlich vorangehenden vierten Schritt, auf die Oberfläche (12a, 12b) der Grundplatte (12) aufbringt.

4. Verfahren nach einem der Ansprüche 1 bis 3,
**dadurch gekennzeichnet, dass** man die Papierlage (14, 18) in einem dem zweiten Schritt (DS, RS) zeitlich vorangehenden fünften Schritt formatiert.

5. Verfahren nach einem der Ansprüche 1 bis 4,
**dadurch gekennzeichnet, dass** man die ersten Schritte (BID, BIR) des Aufbringens des jeweiligen Harzes auf die jeweilige Oberfläche (12a, 12b) oder/und die zweiten Schritte (DS, RS) des Aufbringens der jeweiligen Papierlage (14, 18) auf die jeweilige mit Harz versehene Oberfläche (12a, 12b) im Wesentlichen gleichzeitig vornimmt.

6. Verfahren nach einem der Ansprüche 1 bis 5,
**dadurch gekennzeichnet, dass** man dann, wenn die Grundplatte (12) an ihrer Sichtfläche (12a) sowohl mit einer Dekorpapierlage (14) als auch mit einer Deckpapierlage (20) versehen ist, in dem ersten Schritt (BID) eine Harzmenge auf die Sichtfläche (12a) der Grundplatte (12) aufbringt, die unter Berücksichtigung beider Papierlagen (14, 20) bemessen ist.

7. Verfahren nach einem der Ansprüche 1 bis 6,
**dadurch gekennzeichnet, dass** man dann, wenn die Grundplatte (12) an ihrer Sichtfläche (12a) sowohl mit einer Dekorpapierlage (14) als auch mit einer Deckpapierlage (20) versehen ist, die zweiten Schritte (DS, OS) des Aufbringens der beiden Papierlagen (14, 20) auf die mit Harz versehene Sichtfläche (12a) der Grundplatte (12) oder/und die dritten Schritte (HP) des Verpressens der beiden Papierlagen (14, 20) mit der Grundplatte (12) im Wesentlichen gleichzeitig vornimmt.

8. Verfahren nach einem der Ansprüche 1 bis 7,
**dadurch gekennzeichnet, dass** das Harz ein Aminoplastharz ist, vorzugsweise ein Harnstoffharz oder ein Melaminharz oder ein Harnstoffharz-Melaminharz-Gemisch.

9. Verfahren nach einem der Ansprüche 1 bis 8,
**dadurch gekennzeichnet, dass** das Harz wenigstens einen die Abriebfestigkeit erhöhenden Stoff, beispielsweise Korund, enthält.

10. Verfahren nach dem Oberbegriff des Anspruchs 1 und gewünschtenfalls dem Kennzeichen eines der Ansprüche 1 bis 9,
**dadurch gekennzeichnet, dass** eine Sichtoberfläche (14a, 20a) der Dekorpapierlage (14) oder der Deckpapierlage (20) zunächst wenigstens einer Oberflächenbehandlung unterzogen wird, und dass dann auf diese behandelte Oberfläche wenigstens eine Lackschicht (30) aufgetragen wird.

11. Verfahren nach Anspruch 10,
**dadurch gekennzeichnet, dass** die wenigstens eine Oberflächenbehandlung eine chemische Behandlung umfasst.

12. Verfahren nach Anspruch 11,
**dadurch gekennzeichnet, dass** die wenigstens eine Oberflächenbehandlung das Auftragen eines Haftvermittlers, beispielsweise von organofunktionellem Silan, oder eine Fluorierung umfasst.

13. Verfahren nach Anspruch einem der Ansprüche 10 bis 12,
**dadurch gekennzeichnet, dass** die wenigstens eine Oberflächenbehandlung eine elektrische Behandlung umfasst.

14. Verfahren nach Anspruch 13,
**dadurch gekennzeichnet, dass** die wenigstens eine Oberflächenbehandlung eine Coronabehandlung oder eine Plasmabehandlung umfasst.

15. Verfahren nach einem der Ansprüche 10 bis 14,
**dadurch gekennzeichnet, dass** die wenigstens eine Oberflächenbehandlung eine mechanische Behandlung umfasst.

16. Verfahren nach Anspruch 15,
**dadurch gekennzeichnet, dass** die wenigstens eine Oberflächenbehandlung ein Anschleifen der Oberfläche umfasst.

17. Verfahren nach einem der Ansprüche 10 bis 16,
**dadurch gekennzeichnet, dass** der Lack wenigstens einen die Abriebfestigkeit erhöhenden Stoff, beispielsweise Korund, enthält.

## Claims

1. A method for producing a cladding element (10), for example a flooring panel, a wall cladding element, a furniture face element or the like, wherein the cladding element (10) comprises a base board (12) which on two surfaces, namely its visible surface (12a) and its contact surface (12b) opposite the visible surface, is provided with a respective paper layer (14,18) impregnated with resin,
wherein in a first step (BID,BIR) the resin is applied to the surfaces (12a,12b) of the base board (12), in a second step (DS,RS) following in time the first step (BID,BIR) the paper layers (14,18) are applied to the surfaces (12a,12b) of the base board (12), and in a third step (HP) following in time the second step (DS,RS) the base board (12) provided with resin and the two paper layers (14,18) are pressed together substantially simultaneously,
wherein both paper layers (14,18) are impregnated with the resin only in the third step (HP).

2. A method according to Claim 1,
**characterised in that** a hardener necessary for hardening the resin in the first step (BID,BIR) is applied jointly with the resin to the surface (12a,12b) of the base board (12), preferably as a resin-hardener mixture.

3. A method according to Claim 1,
**characterised in that** a hardener necessary for hardening the resin is applied separately from the resin to the surface (12a,12b) of the base board (12), preferably in a fourth step preceding in time the first step (BID, BIR) .

4. A method according to any one of Claims 1 to 3,
**characterised in that** the paper layer (14,18) is formatted in a fifth step preceding in time the second step (DS,RS).

5. A method according to any one of Claims 1 to 4,
**characterised in that** the first steps (BID,BIR) of applying the respective resin to the respective surface (12a,12b) and/or the second steps (DS,RS) of applying the respective paper layer (14,18) to the respective surface (12a,12b) provided with resin are carried out substantially simultaneously.

6. A method according to any one of Claims 1 to 5,
**characterised in that** if the base board (12) is provided on its visible surface (12a) both with a decorative paper layer (14) and with a covering paper layer (20), in the first step (BID) an amount of resin is applied to the visible surface (12a) of the base board (12) which is measured taking into account both paper layers (14,20).

7. A method according to any one of Claims 1 to 6,
**characterised in that** if the base board (12) is provided on its visible surface (12a) both with a decorative paper layer (14) and with a covering paper layer (20), the second steps (DS,OS) of applying the two paper layers (14,20) to the visible surface (12a) of the base board (12) provided with resin and/or the third steps (HP) of pressing the two paper layers (14,20) with the base board (12) are carried out substantially simultaneously.

8. A method according to any one of Claims 1 to 7,
**characterised in that** the resin is an amino resin, preferably a urea-formaldehyde resin or a melamine resin or a urea-formaldehyde melamine resin mixture.

9. A method according to any one of Claims 1 to 8,
**characterised in that** the resin contains at least one substance increasing abrasion resistance, for example corundum.

10. A method according to the preamble of Claim 1 and, if desired, the characterising part of any one of Claims 1 to 9,
**characterised in that** a visible surface (14a,20a) of the decorative paper layer or of the covering paper layer (20) is firstly subjected to at least one surface treatment, and **in that** at least one varnish layer (30) is then applied to this treated surface.

11. A method according to Claim 10,
**characterised in that** the at least one surface treatment comprises a chemical treatment.

12. A method according to Claim 11,
**characterised in that** the at least one surface treatment comprises the application of an adhesion promoter, for example of organofunctional silane, or a fluorination.

13. A method according to any one of Claims 10 to 12,
**characterised in that** the at least one surface treatment comprises an electrical treatment.

14. A method according to Claim 13,
**characterised in that** the at least one surface treatment comprises a corona treatment or a plasma treatment.

15. A method according to any one of Claims 10 to 14, **characterised in that** the at least one surface treatment comprises a mechanical treatment.

16. A method according to Claim 15,
**characterised in that** the at least one surface treatment comprises a grinding of the surface.

17. A method according to any one of Claims 10 to 16, **characterised in that** the varnish contains at least one substance increasing abrasion resistance, for example corundum.

## Revendications

1. Procédé de production d'un élément de revêtement (10), par exemple d'un panneau de plancher, d'un élément de revêtement mural, d'un élément frontal apparent de meuble ou similaires, l'élément de revêtement (10) comportant un panneau de base (12) qui est pourvu respectivement sur deux surfaces d'une couche de papier (14, 18) imprégnée de résine, à savoir sa surface apparente (12a) et sa surface d'appui (12b) opposée à la surface apparente,
dans lequel on applique la résine sur les surfaces (12a, 12b) de la plaque de base (12) dans une première étape (BID, BIR), on applique les couches de papier (14, 18) sur les surfaces (12a, 12b) de la plaque de base (12) dans une deuxième étape (DS, RS) consécutive à la première étape (BID, BIR), et dans une troisième étape (HP) consécutive à la deuxième étape (DS, RS), on presse la plaque de base (12) pourvue de résine sur les surfaces (12a, 12b) et les deux couches de papier (14, 18) sensiblement en même temps l'une avec l'autre,
les deux couches de papier (14, 18) n'étant imprégnées de résine que dans la troisième étape (HP).

2. Procédé selon la revendication 1,
**caractérisé en ce qu'**on applique un durcisseur nécessaire au durcissement de la résine dans la première étape (BID, BIR) conjointement avec la résine sur la surface (12a, 12b) de la plaque de base, de préférence sous la forme d'un mélange résine-durcisseur.

3. Procédé selon la revendication 1,
**caractérisé en ce qu'**on applique un durcisseur nécessaire au durcissement de la résine séparément de la résine, de préférence dans une quatrième étape précédant la première étape (BID, BIR) sur la surface (12a, 12b) de la plaque de base (12).

4. Procédé selon l'une quelconque des revendications 1 à 3,
**caractérisé en ce qu'**on formate la couche de papier (14, 18) dans une cinquième étape précédant la deuxième étape (DS, RS).

5. Procédé selon l'une quelconque des revendications 1 à 4,
**caractérisé en ce qu'**on réalise sensiblement en même temps les premières étapes (BID, BIR) d'application de la résine respective sur la surface respective (12a, 12b) et/ou les deuxièmes étapes (DS, RS) d'application de la couche de papier respective (14, 18) sur la surface (12a, 12b) respective pourvue de résine.

6. Procédé selon l'une quelconque des revendications 1 à 5,
**caractérisé en ce que** si la plaque de base (12) est pourvue sur sa surface apparente (12a) non seulement d'une couche de papier décoratif (14) mais aussi d'une couche de papier de recouvrement (20), on applique alors dans la première étape (BID) une quantité de résine sur la surface apparente (12a) de la plaque de base (12) qui est calculée en tenant compte des deux couches de papier (14, 20).

7. Procédé selon l'une quelconque des revendications 1 à 6,
**caractérisé en ce que** si la plaque de base (12) est pourvue sur sa surface apparente (12a) non seulement d'une couche de papier décoratif (14) mais aussi d'une couche de papier de recouvrement (20), alors on réalise sensiblement en même temps les deuxièmes étapes (DS, OS) d'application des deux couches de papier (14, 20) sur la surface apparente (12a) pourvue de résine de la plaque de base (12) et/ou les troisièmes étapes (HP) de pressage des deux couches de papier (14, 20) avec la plaque de base (12).

8. Procédé selon l'une quelconque des revendications 1 à 7,
**caractérisé en ce que** la résine est une résine amino, de préférence une résine d'urée ou une résine de mélamine ou un mélange de résine de mélamine et de résine d'urée.

9. Procédé selon l'une quelconque des revendications 1 à 8,
**caractérisé en ce que** la résine contient au moins une substance augmentant la résistance à l'abrasion, par exemple du corindon.

10. Procédé selon le préambule de la revendication 1 et si souhaité la caractéristique de l'une quelconque des revendications 1 à 9,
**caractérisé en ce qu'**une surface apparente (14a, 20a) de la couche de papier décoratif (14) ou de la couche de papier de recouvrement (20) est soumise tout d'abord au moins à un traitement de surface et **en ce qu'**au moins une couche de vernis (30) est appliquée sur cette surface traitée.

11. Procédé selon la revendication 10,
**caractérisé en ce qu'**au moins un traitement de surface comporte un traitement chimique.

12. Procédé selon la revendication 11,
**caractérisé en ce qu'**au moins un traitement de surface comporte l'application d'un agent adhésif, par exemple de silane organofonctionnel ou une fluoration.

13. Procédé selon l'une quelconque des revendications 10 à 12,
**caractérisé en ce qu'**au moins un traitement de surface comporte un traitement électrique.

14. Procédé selon la revendication 13,
**caractérisé en ce qu'**au moins un traitement de surface comporte un traitement corona ou un traitement plasma.

15. Procédé selon l'une quelconque des revendications 10 à 14,
**caractérisé en ce qu'**au moins un traitement de surface comporte un traitement mécanique.

16. Procédé selon la revendication 15,
**caractérisé en ce qu'**au moins un traitement de surface comporte un affûtage de la surface.

17. Procédé selon l'une quelconque des revendications 10 à 16,
**caractérisé en ce que** le vernis contient au moins une substance augmentant la résistance à l'abrasion, par exemple du corindon.
